# EUROPÄISCHE PATENTSCHRIFT

(11) **EP 4 256 642 B1**
(45) Veröffentlichungstag und Bekanntmachung des Hinweises auf die Patenterteilung: **01.01.2025**
(21) Anmeldenummer: 21811046.8
(22) Anmeldetag: 16.11.2021
(51) Int. Cl.: H01M 10/617, H01M 10/625, H01M 10/6556, H01M 10/6568

(54) **TEMPERIERVORRICHTUNG ZUM TEMPERIEREN EINES ZELLBLOCKS, EINES ELEKTRISCHEN ENERGIESPEICHERS, SOWIE VERFAHREN**
TEMPERATURE CONTROL DEVICE FOR CONTROLLING THE TEMPERATURE OF A CELL BLOCK OF AN ELECTRICAL ENERGY STORE, AND METHOD
DISPOSITIF DE THERMORÉGULATION POUR THERMORÉGULER UN BLOC DE CELLULES D'UN ACCUMULATEUR D'ÉNERGIE ÉLECTRIQUE

(30) Priorität: 07.12.2020 DE 102020007429
(43) Veröffentlichungstag der Anmeldung: 11.10.2023
(73) Patentinhaber: Mercedes-Benz Group AG, 70372 Stuttgart (DE)
(72) Erfinder: WITTMANN, Patrick, 70190 Stuttgart (DE); LÜCK, Alexander, 71636 Ludwigsburg (DE); MAYER, Dominik, 70734 Fellbach (DE); KOLLMANNTHALER, Meike, 71254 Ditzingen (DE); DI LELLA, Giuseppe, 71732 Tamm (DE)
(74) Vertreter: Novagraaf Group
(86) Internationale Anmeldenummer: PCT/EP2021/081836
(87) Internationale Veröffentlichungsnummer: WO 2022/122318

(56) Entgegenhaltungen:
- EP-A2- 1 548 858
- DE-A1- 102017 206 283
- DE-A1- 102018 006 412
- DE-A1- 102019 133 567

## Beschreibung

Die Erfindung betrifft eine Temperiervorrichtung zum Temperieren eines Zellblocks, eines elektrischen Energiespeichers gemäß dem Oberbegriff von Patentanspruch 1. Ferner betrifft die Erfindung ein Verfahren zum Temperieren eines Zellblocks.

Batteriezellen, beispielsweise Lithium-Ionen Batteriezellen, arbeiten in einem bestimmten Arbeitsbereich sinnvoll. Um diesen Arbeitsbereich, der hier insbesondere einen Temperierbereich darstellt, zu erreichen, sind Temperiervorrichtungen bekannt, welche thermische Energie ab- bzw. zuführen können, wodurch die temperaturabhängige Strombeschränkung und die thermische Speicherfähigkeit des Zellblocks erhöht werden. Hierbei sind unterschiedliche Temperiermöglichkeiten bekannt. Beispielsweise kann an einer Unterseite eines Zellblocks eine Kühlplatte mit einer Kühlvorrichtung ausgebildet sein, wobei die Kühlvorrichtung auf Basis eines Fluids gekühlt wird und somit die thermische Energie an das Kühlfluid abgeben kann.

Die DE102018006412A1 betrifft eine Temperiereinheit für eine Batterie, umfassend mindestens einen von einem Temperiermedium durchströmten und durchströmbaren Kanal. Der Kanal weist mindestens einen sich in Strömungsrichtung veränderten Querschnitt auf.

In einer Batteriekühlstruktur gemäß der EP 1 548 858 A2 wird ein Batteriegehäuse, das eine große Anzahl von Batteriemodulen aufnimmt, in die Form einer rechteckigen Röhre mit einem Kühllufteinlass und einem Kühlluftauslass gebracht, und V-förmige Kühlluftführungskanäle mit einer abnehmenden Strömungsweg-Querschnittsfläche werden auf Innenflächen von Luftführungsplatten bereitgestellt, die obere und untere Flächen der rechteckigen Röhre definieren. Der Kühlluftstrom wird durch diese V-förmigen Kühlluftführungskanäle in Richtung eines zentralen Teils auf der stromabwärts gelegenen Seite abgelenkt, wodurch die in dem zentralen Teil angeordneten Batteriemodule effektiv gekühlt werden, bei denen der Kühleffekt schlecht ist, um die Temperatur der Batteriemodule gleichmäßig zu machen, was zu einer unterdrückten Veränderung der Kapazität und Lebensdauer führt.

Aufgabe der vorliegenden Erfindung ist es eine Temperiervorrichtung sowie ein Verfahren zu schaffen, mittels welchen eine effizientere Temperierung eines Zellblocks eines elektrischen Energiespeichers realisiert werden kann.

Diese Aufgabe wird durch eine Temperiervorrichtung sowie durch ein Verfahren gemäß den unabhängigen Patentansprüchen gelöst. Vorteilhafte Ausgestaltungsformen sind in den Unteransprüchen angegeben.

Ein Aspekt der Erfindung betrifft eine Temperiervorrichtung zum Temperieren eines Zellblocks eines elektrischen Energiespeichers, mit zumindest einem Temperierfluid, welches in einem Temperierkanal zum Temperieren des Zellblocks geführt ist, wobei der Temperierkanal in einer Strömungsrichtung des Temperierfluids betrachtet einen sich ändernden Querschnitt aufweist, und wobei eine Vielzahl von Batteriezellen des Zellblocks zumindest bereichsweise in der Strömungsrichtung betrachtet nebeneinander angeordnet sind.

Es ist vorgesehen, dass das Temperierfluid zum direkten Temperieren des Zellblocks ausgebildet ist, und der Temperierkanal sich von einer ersten Batteriezelle der nebeneinander angeordneten Batteriezellen in der Strömungsrichtung bis zu einem vorgegebenen Abschnitt des Temperierkanals verjüngt und sich der Temperierkanal ab dem vorgegebenen Abschnitt wieder aufweitet.

Somit kann eine homogene Kühlung des Zellblocks mit der Vielzahl von Batteriezellen realisiert werden. Diese erlaubt eine maximale Ausnutzung des temperaturabhängigen Stromlimits und der thermischen Speicherfähigkeit des Zellblocks, wodurch insbesondere die Dauerleistung erhöht werden kann. Insbesondere löst somit die Erfindung das Problem, dass durch die Erwärmung des Fluids in Durchströmungsrichtung eines Zellmoduls es zu einer ungleichmäßigen Kühlung kommen kann. Zellen am Kühlmitteleingang sind kalt und Zellen am Kühlmittelauslass sind warm. Dies führt zu einer schlechten Ausnützung der thermischen Speicherkapazität der Batteriezellen, da insbesondere die heißeste Batteriezelle begrenzend ist. Durch die lokale Anpassung des Strömungsquerschnitts kann eine gezielte Verringerung von hot- und cold spots realisiert werden. Somit kann eine verbesserte Gleichverteilung der Temperatur realisiert werden, wodurch die Leistungssteigerung realisiert werden kann und insbesondere die Streuungsverringerung innerhalb des Moduls verbessert und die Alterungsmechanismen verringert werden.

Bei dem Zellblock kann insbesondere vorgesehen sein, dass die einzelnen nebeneinander angeordneten Batteriezellen sowohl parallel als auch seriell verschaltet werden können. Diese können sowohl radial nebeneinander als auch axial nebeneinander umströmt werden.

Insbesondere kann mittels der Temperiervorrichtung sowohl eine Kühlung der Batteriezellen als auch eine Erwärmung der Batteriezellen durchgeführt werden. Beispielsweise kann im Betrieb der Batteriezellen eine Kühlung durchgeführt werden, sodass diese auf einen vorgegebenen Temperaturwert gekühlt werden. Beispielsweise vor einem Start eines Kraftfahrzeugs ist es vorteilhaft, wenn die Batterien schnell auf eine Betriebstemperatur gebracht werden, sodass es hier von Vorteil ist, wenn diese erwärmt werden. Somit kann sowohl eine Erwärmung als auch eine Kühlung mittels der Temperiervorrichtung durchgeführt werden.

Es ist der Temperierkanal zwischen einer Dichtebene an den Batteriezellen, welche im Wesentlichen in der Strömungsrichtung ausgebildet ist, und einer Gehäusewand eines Gehäuses des elektrischen Energiespeichers ausgebildet. Die Dichtebene ist insbesondere an den Zellwänden der Batteriezellen ausgebildet. Insbesondere befinden sich die Batteriezellen in einem Innenraum des Gehäuses. Die Dichtebene trennt insbesondere zwei Kühlungsebenen, beispielsweise eine Bodenkühlung und eine Kopfkühlung fluidisch voneinander ab. Somit kann durch die Dichtebene sowohl eine Bodenkühlung als auch eine Kopfkühlung der Batteriezellen realisiert werden.

Weiterhin vorteilhaft ist, wenn der sich ändernde Querschnitt des Temperierkanals an einer Gehäusewand ausgebildet ist. Insbesondere kann somit die Gehäusewand, welche auch als Modulgehäusewand bezeichnet werden kann, die entsprechende Querschnittsveränderungen aufweisen, so dass die Homogenität der Kühlung verbessert werden kann. Insbesondere bleibt bei der Bodenkühlung beziehungsweise der Kopfkühlung die gekühlte Fläche je Zelle konstant.

Ferner hat es sich als vorteilhaft erwiesen, wenn der Temperierkanal in einem Innenraum in einer Dichtebene an den Batteriezellen, welche im Wesentlichen in der Strömungsrichtung ausgebildet ist, ausgebildet ist. Die Dichtebene kann dabei beispielsweise zylinderförmig ausgebildet sein und im Innenraum hohl sein, sodass das Temperierfluid durch den Innenraum strömen kann. Somit kann beispielsweise eine Mantelkühlung über die Dichtebene realisiert werden.

In einer weiteren vorteilhaften Ausgestaltungsform weist die Dichtebene eine erste Dichtwand und eine gegenüberliegende zweite Dichtwand auf, wobei die erste Dichtwand und die zweite Dichtwand im Wesentlichen in der Strömungsrichtung ausgebildet sind, und der sich ändernde Querschnitt an zumindest einer der Dichtwände ausgebildet ist. Insbesondere ist somit die Dichtebene hohlzylindrisch ausgebildet und zumindest eine der Dichtwände weist den sich ändernden Querschnitt auf. Somit kann in dem Innenraum der Dichtebene eine verbesserte Homogenität der Kühlung der Batteriezellen realisiert werden.

Ebenfalls vorteilhaft ist, wenn der sich ändernde Querschnitt an beiden Dichtwänden ausgebildet ist. Somit kann eine weitere Verbesserung der Temperaturhomogenität innerhalb des Innenraums der Dichtebene realisiert werden. Somit kann es zu einer Effizienzsteigerung des Zellblocks kommen.

Gemäß einer weiteren vorteilhaften Ausgestaltungsform ist der vorgegebene Abschnitt im Wesentlichen mittig in der Strömungsrichtung betrachtet an den nebeneinander ausgebildeten Batteriezellen ausgebildet. Mit anderen Worten ist die Verjüngung des Temperierkanals bis zu einer Mitte des Temeperierkanals ausgebildet. Insbesondere in Strömungsrichtung betrachtet verjüngt sich somit der Temperierkanal. Es findet somit an einem sogenannten cold spot eine Verengung statt. Ungefähr nach der Mitte in Strömungsrichtung betrachtet weitet sich dann wiederum der Temperierkanal auf. Insbesondere kann somit in Richtung eines hot spots betrachtet wiederum eine Erweiterung des Temperierkanals realisiert werden. Somit kann eine verbesserte Homogenität der Kühlung realisiert werden.

Ferner hat es sich als vorteilhaft erwiesen, wenn die Temperiervorrichtung zum Durchführen einer Manteltemperierung und/oder einer Kopftemperierung und/oder einer Bodentemperierung ausgebildet ist. In einer bevorzugten Ausführungsform ist die Temperiervorrichtung zum Durchführen einer Manteltemperierung, einer Kopftemperierung und einer Bodentemperierung ausgebildet. Beispielsweise kann die Kopftemperierung und die Bodentemperierung einen Hinlauf des Temperierfluids ausbilden und über die Manteltemperierung kann dann wiederum der Rücklauf ausgebildet werden. Somit kann eine vorteilhafte Temperierung der Batteriezellen realisiert werden.

Es hat sich weiterhin als vorteilhaft erwiesen, wenn die Batteriezelle als prismatische Batteriezelle und/oder zylindrische Batteriezelle und/oder Pouchzelle ausgebildet ist. Somit können unterschiedliche Batteriezellenarten mittels der Temperiervorrichtung temperiert werden. Dadurch ist die Temperiervorrichtung hochflexibel einsetzbar.

Ein weiterer Aspekt der Erfindung betrifft einen elektrischen Energiespeicher mit einer Temperiervorrichtung nach dem vorhergehenden Aspekt.

Ein nochmals weiterer Aspekt der Erfindung betrifft ein Kraftfahrzeug mit einem elektrischen Energiespeicher nach dem vorhergehenden Aspekt. Das Kraftfahrzeug ist insbesondere zumindest teilweise elektrisch, insbesondere vollelektrisch, ausgebildet.

Ein nochmals weiterer Aspekt der Erfindung betrifft ein Verfahren zum Temperieren eines Zellblocks eines elektrischen Energiespeichers mittels einer Temperiervorrichtung, mit zumindest einem Temperierfluid, welches in einem Temperierkanal zum Temperieren des Zellblocks geführt wird, wobei der Temperierkanal in einer Strömungsrichtung des Temperierfluids betrachtet, einen sich ändernden Querschnitt aufweist, und wobei eine Vielzahl von Batteriezellen des Zellblocks zumindest bereichsweise in Strömungsrichtung betrachtet nebeneinander angeordnet sind.

Es ist vorgesehen, dass mittels des Temperierfluids der Zellblock direkt gekühlt wird, wobei sich der Temperierkanal von einer ersten Batteriezelle der nebeneinander angeordneten Batteriezellen in der Strömungsrichtung bis zu einem vorgegebenen Abschnitt des Temperierkanals verjüngt und sich der Temperierkanal ab dem vorgegebenen Abschnitt wieder aufweitet.

Vorteilhafte Ausgestaltungsformen der Temperiervorrichtung sind als vorteilhafte Ausgestaltungsformen des elektrischen Energiespeichers, des Kraftfahrzeugs sowie des Verfahrens anzusehen. Die Temperiervorrichtung, der elektrischen Energiespeicher sowie das Kraftfahrzeug weisen dazu gegenständliche Merkmale auf, welche zur Durchführung des Verfahrens notwendig sind.

Weitere Vorteile, Merkmale und Einzelheiten der Erfindung ergeben sich aus der nachfolgenden Beschreibung bevorzugter Ausführungsbeispiele sowie anhand der

Zeichnung(en). Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Draufsicht auf eine Ausführungsform eines Kraftfahrzeugs mit einer Ausführungsform eines elektrischen Energiespeichers mit einer Ausführungsform einer Temperiervorrichtung;
- Fig. 2: Eine schematische Draufsicht auf eine weitere Ausführungsform eines elektrischen Energiespeichers mit einer Ausführungsform einer Temperiervorrichtung; und
- Fig. 3: Eine weitere schematische Draufsicht auf eine Ausführungsform eines elektrischen Energiespeichers mit einer Ausführungsform einer Temperiervorrichtung.

In den Figuren sind gleiche oder funktionsgleiche Elemente mit den gleichen Bezugszeichen versehen.

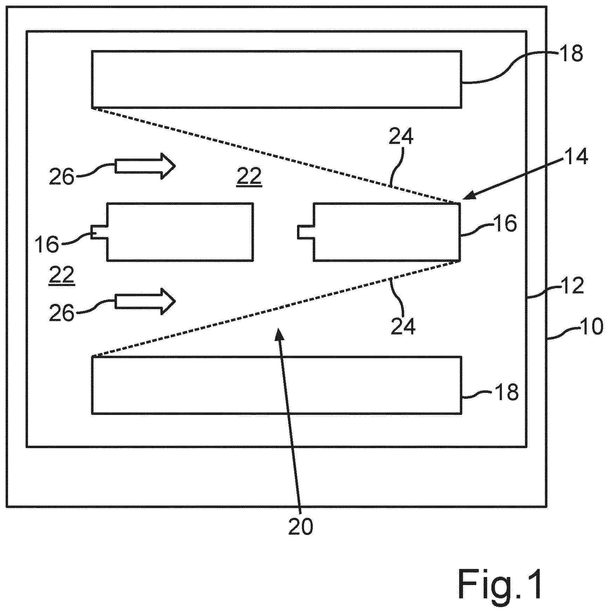

Fig.1 zeigt in einer schematischen Draufsicht eine Ausführungsform eines Kraftfahrzeugs 10. Das Kraftfahrzeug 10 ist insbesondere zumindest teilweise elektrisch betrieben. Insbesondere ist das Kraftfahrzeug 10 vollelektrisch betrieben. Das Kraftfahrzeug 10 weist einen elektrischen Energiespeicher 12 auf. Der elektrische Energiespeicher 12 wiederum weist zumindest einen Zellblock 14 auf. Im vorliegenden Ausführungsbeispiel weist der Zellblock 14 zwei Batteriezellen 16 auf, welche nebeneinander angeordnet sind. Insbesondere sind die Batteriezellen 16 im vorliegenden Ausführungsbeispiel axial nebeneinander angeordnet.

Der Zellblock 14 weist ein Gehäuse auf, welches Vorliegen insbesondere durch zwei Gehäusewände 18 dargestellt ist. Ferner weist der Zellblock 14 eine Temperiervorrichtung 20 auf. Die Temperiervorrichtung 20 kann dabei sowohl zum Kühlen als auch zum Wärmen der Batteriezellen 16 ausgebildet sein.

Die Temperiervorrichtung 20 ist zum Temperieren des Zellblocks 14 des elektrischen Energiespeichers 12 ausgebildet und weist hierzu zumindest einen Temperierfluid 22 auf, welches in einem Temperierkanal 24 zum Temperieren des Zellblocks 14 geführt ist, wobei der Temperierkanal 24 in einer Strömungsrichtung 26 des Temperierfluids 22 betrachtet einen sich ändernden Querschnitt aufweist, und wobei eine Vielzahl von Batteriezellen 16 des Zellblocks 14 zumindest bereichsweise in der Strömungsrichtung 26 betrachtet nebeneinander angeordnet sind.

Das Temperierfluid 22 ist zum direkten Temperieren des Zellblocks 14 ausgebildet, und der Temperierkanal 24 verjüngt sich von einer ersten Batteriezelle 16 in der Strömungsrichtung 26 bis zu einem vorgegebenen Abschnitt 28 des Temperierkanals 24, wobei sich der Temperierkanal 24 ab dem vorgegebenen Abschnitt 28 wieder aufweitet.

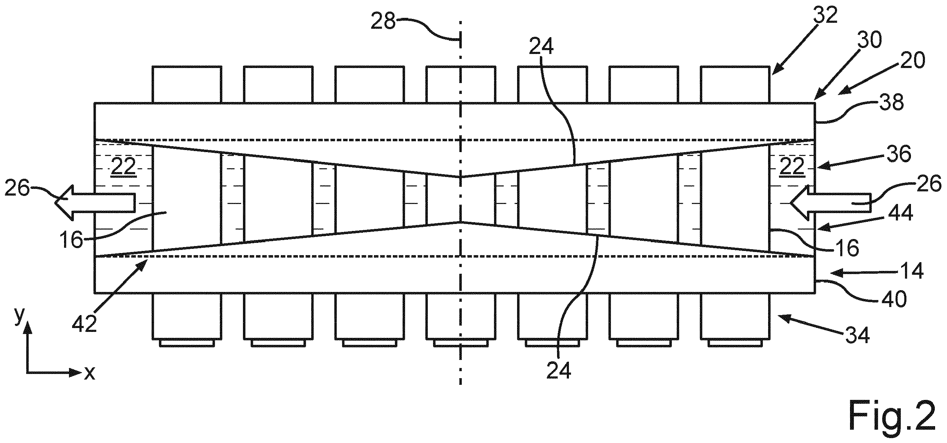

Fig. 2 zeigt eine schematische Draufsicht auf eine weitere Ausführungsform der Temperiervorrichtung 20. Im vorliegenden Ausführungsbeispiel ist insbesondere eine x/y Ebene gezeigt. Insbesondere bewegt sich das Kühlfluid 22 mit der Strömungsrichtung 26 vorliegend entgegen der x-Richtung. Der Zellblock 14 weist im vorliegenden Ausführungsbeispiel sieben nebeneinander ausgebildete Batteriezellen 16 auf. Die Batteriezellen 16 wiederum sind über eine Dichtebene 30 fluidisch von einem Zellboden 32 und einem Zellkopf 34 getrennt, sodass eine Zellmitte 36 einer jeden Batteriezelle 16 vorliegend temperiert wird.

Im vorliegenden Ausführungsbeispiel weist die Dichtebene 30 eine erste Dichtwand 38 sowie eine zweite Dichtwand 40 auf, wobei die erste Dichtwand 38 und die zweite Dichtwand 40 gegenüberliegend voneinander ausgebildet sind.

Vorliegend ist die erste Batteriezelle 16 bei einem Temperiermitteleinlass 44 ausgebildet.

In der Fig. 2 ist insbesondere gezeigt, dass der Temperierkanal 24 in einem Innenraum in der Dichtebene 30 an den Batteriezellen 16, welche im Wesentlichen in der Strömungsrichtung 26 ausgebildet ist, ausgebildet ist. Insbesondere weist die Dichtebene 30 vorliegend die erste Dichtwand 38 und die gegenüberliegende zweite Dichtwand 40 auf, wobei die erste Dichtwand 38 und die zweite Dichtwand 40 im Wesentlichen in der Strömungsrichtung 26 ausgebildet sind, und der sich ändernde Querschnitt an zumindest einer der Dichtwände 38, 40 ausgebildet ist. Vorliegend ist insbesondere gezeigt, dass der sich ändernde Querschnitt an beiden Dichtwänden 38, 40 ausgebildet ist. Insbesondere ist der sich ändernde Querschnitt vorliegend durch h(x) gezeigt. Insbesondere wird somit eine Höhe des Temperierkanals 24 verändert. Im vorliegenden Ausführungsbeispiel ist ferner gezeigt, dass sowohl die erste Dichtwand 38 sowie die zweite Dichtwand 40 zum Erzeugen der unterschiedlichen Höhe entsprechende Steigungen aufweisen. Die erste Steigung der ersten Dichtwand 38 ist durch a(x) gezeigt und die zweite Steigung der zweiten Dichtebene 40 ist durch b(x) gezeigt.

Vorliegend kann insbesondere die lokale Querschnittsveränderung mittels einer Mantelkühlung realisiert werden. Insbesondere kann somit die Homogenität der Kühlung optimiert werden, wobei insbesondere durch eine entsprechende Wahl von h(x) über a(x) und b(x) durchgeführt wird. Vorliegend kann insbesondere vorgesehen sein, dass bei einem Hot Spot, welcher vorliegend insbesondere am Ende des Zellblocks 14 in Strömungsrichtung 26 betrachtet, welches durch das Bezugszeichen 42 beschrieben ist, eine Erweiterung des Temperierkanals 24 erzeugt ist. Durch das Bezugszeichen 44 ist insbesondere ein Temperiermitteleinlass gezeigt, wobei hierbei ein Cold Spot entsteht. Es ist nun vorgesehen, dass sich an dem Cold Spot eine Verengung aufbaut, welches insbesondere durch die Verjüngung durchgeführt wird. Im vorliegenden Ausführungsbeispiel ist die gekühlte Fläche je Batteriezelle 16 insbesondere abhängig von h(x). Über a(x), b(x) können somit Hot Spots beziehungsweise Cold Spots unten und oben an den jeweiligen Batteriezellen 16 vermindert werden. Insbesondere ist vorgesehen, dass der Wärmestrom Q(x) proportional zum Wärmeübergangs-koeffizienten α und der gekühlten Fläche A_{z}(x) ist. Dies wiederum ist proportional zu einem Produkt aus der Wurzel der Reynolds-Zahl sowie der Höhe h(x). Dies ist wiederum proportional zu einem Produkt aus Höhe h(x) und der Wurzel aus der Fließgeschwindigkeit. Dies ist wiederum proportional zu der Wurzel aus 1 durch die Höhe h(x) multipliziert mit der Höhe h(x), wobei dann wiederum als Ergebnis herauskommt, dass der Wärmeübertrag Q(x) gleich der Wurzel aus h(x) ist.

Die Fig. 2 zeigt ferner, dass der vorgegebene Abschnitt 28 im Wesentlichen mittig in der Strömungsrichtung 26 betrachtet an den nebeneinander ausgebildeten Batteriezellen 16 ausgebildet ist. Vorliegend ist insbesondere die Temperiervorrichtung 20 zum Durchführen einer Manteltemperierung ausgebildet. Zusätzlich oder anstatt kann die Temperiervorrichtung 20 auch für eine Kopftemperierung und/oder einer Bodentemperierung ausgebildet sein.

Ferner ist insbesondere gezeigt, dass die Batteriezelle 16 als prismatische Batteriezelle und/oder als zylindrische Batteriezelle und/oder als Pouchzelle ausgebildet ist.

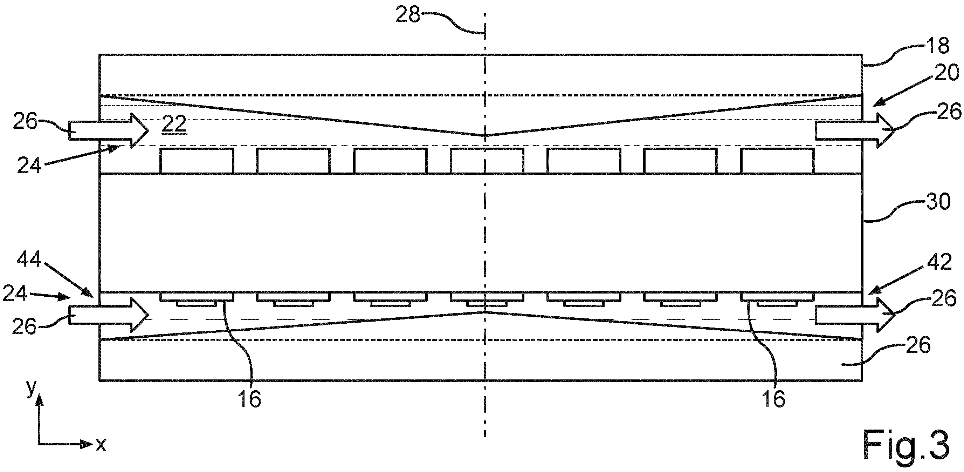

Fig. 3 zeigt eine weitere schematische Draufsicht auf eine weitere Ausführungsform einer Temperiervorrichtung 20. In der folgenden Ausführungsform ist insbesondere eine Kopfkühlung und/oder Bodenkühlung gezeigt. Im folgenden Ausführungsbeispiel ist insbesondere gezeigt, dass der Temperierkanal 24 zwischen der Dichtebene 30 an der Batteriezelle 16, welche im Wesentlichen in der Strömungsrichtung 26 ausgebildet ist, und den Gehäusewänden 18 des Gehäuses des elektrischen Energiespeichers 12 ausgebildet ist. Der sich ändernde Querschnitt des Temperierkanals 24 ist insbesondere an der Gehäusewand 18 ausgebildet. Insbesondere ist vorliegend gezeigt, dass an beiden Gehäusewänden 18 der sich ändernde Querschnitt des Temperierkanals 24 ausgebildet ist. In der Fig. 3 ist insbesondere eine Bodenkühlung sowie eine Kopfkühlung gezeigt.

Insbesondere ist gezeigt, dass zum Erzeugen der Temperierung insbesondere ein symmetrisches Profil für den Temperierkanal 24 ausgebildet ist.

Im folgenden Ausführungsbeispiel ist insbesondere der Wärmestrom Q(x) proportional zum Wärmeübergangskoeffizenten α und zur gekühlten Fläche A_{z}. Dies ist wiederum proportional zu einem Produkt aus der Wurzel aus der Reynolds-Zahl und der gekühlten Fläche A_{z}. Dies wiederum ist proportional zu einem Produkt aus der Wurzel aus der Fließgeschwindigkeit und der gekühlten Fläche A_{z}. Dies wiederum ist proportional zur Wurzel aus 1 durch h(x) multipliziert mit der gekühlten Fläche A_{z}. Somit ist bei der Bodenkühlung beziehungsweise bei der Kopfkühlung die Optimierung der Homogenität der Kühlung durch eine geschickte Wahl der Höhe h(x) ermöglicht. Die gekühlte Fläche der Batteriezelle 16 ist vorliegend konstant.

Insbesondere kann vorgesehen sein, dass in einer bevorzugten Ausführungsform sowohl eine Mantelkühlung, wie sie in Fig. 2 beschrieben ist, als auch eine Kopf- und/oder Bodenkühlung, wie es in der Fig. 3 beschrieben ist, vorgesehen sind. Hierzu kann dann beispielsweise wiederum die Dichtebene 30 wie in der Fig. 2 ausgebildet sein mit der ersten Dichtwand 38 und der zweiten Dichtwand 40, wobei dann wiederum insbesondere vorgesehen sein kann, dass die Kopfkühlung und/oder Bodenkühlung als Zulauf des Temperierfluids 22 dienen und der Rücklauf des Temperierfluids 22 innerhalb der Dichtebene 30 realisiert ist.

Die Erfindung betrifft auch ein Verfahren zum Temperieren des Zellblocks14 des elektrischen Energiespeichers 12 mittels der Tempervorrichtung 20, mit zumindest dem Temperierfluid 22, welches in dem Temperierkanal 24 zum Temperieren des Zellblocks 14 geführt ist, wobei der Temperierkanal 24 in der Strömungsrichtung 26 des Temperierfluids 22 betrachtet einen sich ändernden Querschnitt aufweist, und wobei eine Vielzahl von Batteriezellen 16 des Zellblocks 14 bereichsweise nebeneinander angeordnet sind. Es ist dabei vorgesehen, dass mittels des Temperierfluids 22 der Zellblock 14 direkt gekühlt wird, wobei sich der Temperierkanal 24 von einer ersten Batteriezelle der nebeneinander angeordneten Batteriezellen 16 in der Strömungsrichtung 26 bis zu dem vorgegebenen Abschnitt 28 des Temperierkanals verjüngt und sich der Temperierkanal 24 ab dem vorgegebenen Abschnitt 28 wieder aufweitet.

Insgesamt zeigen die Figuren eine Optimierung der Temperaturhomogenität eines direkt gekühlten Zellakumulator-Modul.

### Bezugszeichenliste

- 10: Kraftfahrzeug
- 12: elektrische Energiespeicher
- 14: Zellblock
- 16: Batteriezelle
- 18: Gehäusewand
- 20: Temperiervorrichtung
- 22: Temperierfluid
- 24: Temperierkanal
- 26: Strömungsrichtung
- 28: vorgegebener Abschnitt
- 30: Dichtebene
- 32: Bodenbereich
- 34: Kopfbereich
- 36: Mittelbereich
- 38: Dichtwand
- 40: Dichtwand
- 42: Temperierfluidauslass
- 44: Temperierfluideinlass

## Patentansprüche

1. Temperiervorrichtung (20) zum Temperieren eines Zellblocks (14) eines elektrischen Energiespeichers (14), mit zumindest einem Temperierfluid (22), welches in einem Temperierkanal (24) zum Temperieren des Zellblocks (14) geführt ist, wobei der Temperierkanal (24) in einer Strömungsrichtung (26) des Temperierfluids (22) betrachtet einen sich ändernden Querschnitt aufweist, und wobei eine Vielzahl von Batteriezellen (16) des Zellblocks (14) zumindest bereichsweise in der Strömungsrichtung (26) betrachtet nebeneinander angeordnet sind,
**dadurch gekennzeichnet, dass**
das Temperierfluid (22) zum direkten Temperieren des Zellblocks (14) ausgebildet ist, und der Temperierkanal (22) sich von einer ersten Batteriezelle (16) der nebeneinander angeordneten Batteriezellen (16) in der Strömungsrichtung (26) bis zu einem vorgegebenen Abschnitt (28) des Temperierkanals (24) verjüngt und sich der Temperierkanal (24) ab dem vorgegebenen Abschnitt (28) wieder aufweitet, wobei der Temperierkanal (24) zwischen einer Dichtebene (30) an den Batteriezellen (16), welche im Wesentlichen in der Strömungsrichtung (26) ausgebildet ist, und einer Gehäusewand (18) eines Gehäuses des elektrischen Energiespeichers (12) ausgebildet ist.

2. Temperiervorrichtung (20) nach Anspruch 1,
**dadurch gekennzeichnet, dass**
der sich ändernde Querschnitt des Temperierkanals (24) an der Gehäusewand ausgebildet ist.

3. Temperiervorrichtung (20) nach einem der vorhergehenden Ansprüche,
**dadurch gekennzeichnet, dass**
der Temperierkanal (24) in einem Innenraum in einer Dichtebene (30) an den Batteriezellen (16), welche im Wesentlichen in der Strömungsrichtung (26) ausgebildet ist, ausgebildet ist.

4. Temperiervorrichtung (20) nach Anspruch 3,
**dadurch gekennzeichnet, dass**
die Dichtebene (30) eine erste Dichtwand (38) und eine gegenüberliegende zweite Dichtwand (40) aufweist, wobei die erste Dichtwand (38) und die zweite Dichtwand (40) im Wesentlichen in der Strömungsrichtung (26) ausgebildet sind, und der sich ändernde Querschnitt an zumindest einer der Dichtwände (38, 40) ausgebildet ist.

5. Temperiervorrichtung (20) nach Anspruch 4,
**dadurch gekennzeichnet, dass**
der sich ändernde Querschnitt an beiden Dichtwänden (38, 40) ausgebildet ist.

6. Temperiervorrichtung (20) nach einem der vorhergehenden Ansprüche,
**dadurch gekennzeichnet, dass**
der vorgegebene Abschnitt (28) im Wesentlichen mittig in der Strömungsrichtung (26) betrachtet an den nebeneinander ausgebildeten Batteriezellen (16) ausgebildet ist.

7. Temperiervorrichtung (20) nach einem der vorhergehenden Ansprüche,
**dadurch gekennzeichnet, dass**
die Temperiervorrichtung (20) zum Durchführen einer Manteltemperierung und/oder einer Kopftemperierung und/oder einer Bodentemperierung ausgebildet ist.

8. Temperiervorrichtung (20) nach einem der vorhergehenden Ansprüche,
**dadurch gekennzeichnet, dass**
die Batteriezelle (16) als prismatische Batteriezelle und/oder als zylindrische Batteriezelle und/oder als Pouchzelle ausgebildet ist.

9. Verfahren zum Temperieren eines Zellblocks (14) eines elektrischen Energiespeichers (12) mittels einer Temperiervorrichtung (20), mit zumindest einem Temperierfluid (22), welches in einem Temperierkanal (24) zum Temperieren des Zellblocks (14) geführt wird, wobei der Temperierkanal (24) in einer Strömungsrichtung (26) des Temperierfluids (22) betrachtet einen sich ändernden Querschnitt aufweist, und wobei eine Vielzahl von Batteriezellen (16) des Zellblocks (14) zumindest bereichsweise in der Strömungsrichtung (26) betrachtet nebeneinander angeordnet sind,
**dadurch gekennzeichnet, dass**
das mittels des Temperierfluids (22) der Zellblock (14) direkt gekühlt wird, wobei sich der Temperierkanal (24) von einer ersten Batteriezelle (16) der nebeneinander angeordneten Batteriezellen (16) in der Strömungsrichtung (26) bis zu einem vorgegebenen Abschnitt (28) des Temperierkanals (24) verjüngt und sich der Temperierkanal (24) ab dem vorgegebenen Abschnitt (28) wieder aufweitet, wobei der Temperierkanal (24) zwischen einer Dichtebene (30) an den Batteriezellen (16), welche im Wesentlichen in der Strömungsrichtung (26) ausgebildet ist, und einer Gehäusewand (18) eines Gehäuses des elektrischen Energiespeichers (12) ausgebildet ist.

## Claims

1. Temperature-control apparatus (20) for controlling a temperature of a cell block (14) of an electrical energy storage device (14), comprising at least one temperature-control fluid (22) which is guided in a temperature-control channel (24) for controlling the temperature of the cell block (14), the temperature-control channel (24) having a changing cross-section when viewed in a flow direction (26) of the temperature-control fluid (22), and a plurality of battery cells (16) of the cell block (14) being arranged next to one another at least in regions when viewed in the flow direction (26),
**characterized in that**
the temperature-control fluid (22) is designed for directly controlling the temperature of the cell block (14), and the temperature-control channel (22) tapers, in the flow direction (26), from a first battery cell (16) of the battery cells (16) arranged next to one another to a predetermined portion (28) of the temperature-control channel (24) and the temperature-control channel (24) widens again from the predetermined portion (28), the temperature-control channel (24) being formed between a sealing plane (30) on the battery cells (16), which sealing plane is formed substantially in the flow direction (26), and a housing wall (18) of a housing of the electrical energy storage device (12).

2. Temperature-control apparatus (20) according to claim 1,
**characterized in that**
the changing cross-section of the temperature-control channel (24) is formed on the housing wall.

3. Temperature-control apparatus (20) according to either of the preceding claims,
**characterized in that**
the temperature-control channel (24) is formed in an interior in a sealing plane (30) on the battery cells (16), which sealing plane is formed substantially in the flow direction (26).

4. Temperature-control apparatus (20) according to claim 3,
**characterized in that**
the sealing plane (30) has a first sealing wall (38) and an opposing second sealing wall (40), the first sealing wall (38) and the second sealing wall (40) being formed substantially in the flow direction (26), and the changing cross-section being formed on at least one of the sealing walls (38, 40).

5. Temperature-control apparatus (20) according to claim 4,
**characterized in that**
the changing cross-section is formed on both sealing walls (38, 40).

6. Temperature-control apparatus (20) according to any of the preceding claims, **characterized in that**
the predetermined portion (28) is formed substantially centrally when viewed in the flow direction (26) on the battery cells (16) formed next to one another.

7. Temperature-control apparatus (20) according to any of the preceding claims, **characterized in that**
the temperature-control apparatus (20) is designed to carry out peripheral temperature control and/or top temperature control and/or bottom temperature control.

8. Temperature-control apparatus (20) according to any of the preceding claims, **characterized in that**
the battery cell (16) is designed as a prismatic battery cell and/or as a cylindrical battery cell and/or as a pouch cell.

9. Method for controlling a temperature of a cell block (14) of an electrical energy storage device (12) by means of a temperature-control apparatus (20), comprising at least one temperature-control fluid (22) which is guided in a temperature-control channel (24) for controlling the temperature of the cell block (14), the temperature-control channel (24) having a changing cross-section when viewed in a flow direction (26) of the temperature-control fluid (22), and a plurality of battery cells (16) of the cell block (14) being arranged next to one another at least in regions when viewed in the flow direction (26),
**characterized in that**
the cell block (14) is cooled directly by means of the temperature-control fluid (22), the temperature-control channel (24) tapering, in the flow direction (26), from a first battery cell (16) of the battery cells (16) arranged next to one another to a predetermined portion (28) of the temperature-control channel (24) and the temperature-control channel (24) widening again from the predetermined portion (28), the temperature-control channel (24) being formed between a sealing plane (30) on the battery cells (16), which sealing plane is formed substantially in the flow direction (26), and a housing wall (18) of a housing of the electrical energy storage device (12).

## Revendications

1. Dispositif de régulation de température (20) permettant de réguler la température d'un bloc de cellules (14) d'un accumulateur d'énergie (14) électrique, comportant au moins un fluide de régulation de température (22) qui est guidé dans un canal de régulation de température (24) pour réguler la température du bloc de cellules (14), dans lequel le canal de régulation de température (24) présente, vu dans une direction d'écoulement (26) du fluide de régulation de température (22), une section transversale variable, et dans lequel une pluralité de cellules de batterie (16) du bloc de cellules (14) sont disposées les unes à côté des autres, au moins dans certaines zones, vues dans la direction d'écoulement (26),
**caractérisé en ce que**
le fluide de régulation de température (22) est formé pour réguler directement la température du bloc de cellules (14), et le canal de régulation de température (22) se rétrécit depuis une première cellule de batterie (16) parmi les cellules de batterie (16) disposées les unes à côté des autres dans la direction d'écoulement (26) jusqu'à une section (28) prédéterminée du canal de régulation de température (24), et le canal de régulation de température (24) s'élargit à nouveau à partir de la section (28) prédéterminée, dans lequel le canal de régulation de température (24) est formé entre un plan d'étanchéité (30) sur les cellules de batterie (16), lequel plan d'étanchéité est formé sensiblement dans la direction d'écoulement (26), et une paroi de boîtier (18) d'un boîtier de l'accumulateur d'énergie (12) électrique.

2. Dispositif de régulation de température (20) selon la revendication 1, **caractérisé en ce que**
la section transversale variable du canal de régulation de température (24) est formée sur la paroi de boîtier.

3. Dispositif de régulation de température (20) selon l'une des revendications précédentes,
**caractérisé en ce que**
le canal de régulation de température (24) est formé dans un espace intérieur dans un plan d'étanchéité (30) sur les cellules de batterie (16), lequel plan d'étanchéité est formé sensiblement dans la direction d'écoulement (26).

4. Dispositif de régulation de température (20) selon la revendication 3, **caractérisé en ce que**
le plan d'étanchéité (30) présente une première paroi d'étanchéité (38) et une seconde paroi d'étanchéité (40) opposée, dans lequel la première paroi d'étanchéité (38) et la seconde paroi d'étanchéité (40) sont formées sensiblement dans la direction d'écoulement (26), et la section transversale variable est formée sur au moins l'une des parois d'étanchéité (38, 40).

5. Dispositif de régulation de température (20) selon la revendication 4, **caractérisé en ce que**
la section transversale variable est formée sur les deux parois d'étanchéité (38, 40).

6. Dispositif de régulation de température (20) selon l'une des revendications précédentes,
**caractérisé en ce que**
la section (28) prédéterminée est formée sensiblement au centre, vue dans la direction d'écoulement (26), sur les cellules de batterie (16) formées les unes à côté des autres.

7. Dispositif de régulation de température (20) selon l'une des revendications précédentes,
**caractérisé en ce que**
le dispositif de régulation de température (20) est formé pour réaliser une régulation de température d'enveloppe et/ou une régulation de température de tête et/ou une régulation de température de fond.

8. Dispositif de régulation de température (20) selon l'une des revendications précédentes,
**caractérisé en ce que**
la cellule de batterie (16) est formée comme une cellule de batterie prismatique et/ou comme une cellule de batterie cylindrique et/ou comme une cellule de poche.

9. Procédé permettant de réguler la température d'un bloc de cellules (14) d'un accumulateur d'énergie (12) électrique à l'aide d'un dispositif de régulation de température (20), comportant au moins un fluide de régulation de température (22) qui est guidé dans un canal de régulation de température (24) pour réguler la température du bloc de cellules (14), dans lequel le canal de régulation de température (24) présente, vu dans une direction d'écoulement (26) du fluide de régulation de température (22), une section transversale variable, et dans lequel une pluralité de cellules de batterie (16) du bloc de cellules (14) sont disposées les unes à côté des autres, au moins dans certaines zones, vues dans la direction d'écoulement (26),
**caractérisé en ce que**
le bloc de cellules (14) est directement refroidi à l'aide du fluide de régulation de température (22), dans lequel le canal de régulation de température (24) se rétrécit depuis une première cellule de batterie (16) parmi les cellules de batterie (16) disposées les unes à côté des autres dans la direction d'écoulement (26) jusqu'à une section (28) prédéterminée du canal de régulation de température (24), et le canal de régulation de température (24) s'élargit à nouveau à partir de la section (28) prédéterminée, dans lequel le canal de régulation de température (24) est formé entre un plan d'étanchéité (30) sur les cellules de batterie (16), lequel plan d'étanchéité est formé sensiblement dans la direction d'écoulement (26), et une paroi de boîtier (18) d'un boîtier de l'accumulateur d'énergie (12) électrique.
